(19) Europäisches Patentamt
European Patent Office
Office européen des brevets

(11) **EP 2 657 077 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(51) Int Cl.:
***B60Q 1/10*** *(2006.01)*

(21) Anmeldenummer: **13000260.3**

(22) Anmeldetag: **18.01.2013**

(54) **Verfahren und Scheinwerferanlage zum Ausgleich von Ausrichtfehlern eines Scheinwerfers**

Method and headlamp assembly for compensation of alignment errors a headlamp

Procédé et installation de phare destinés à compenser les erreurs d'alignement d'un phare

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2012 DE 102012007908**

(43) Veröffentlichungstag der Anmeldung:
**30.10.2013 Patentblatt 2013/44**

(73) Patentinhaber: **AUDI AG**
**85045 Ingolstadt (DE)**

(72) Erfinder: **Totzauer, Alexander**
**85080 Gaimersheim (DE)**

(74) Vertreter: **Thielmann, Frank**
**AUDI AG**
**Patentabteilung**
**85045 Ingolstadt (DE)**

(56) Entgegenhaltungen:
**EP-A1- 2 128 590 DE-A1-102007 022 524**
**DE-A1-102007 049 619 DE-A1-102008 011 699**
**DE-A1-102010 006 190 DE-A1-102010 046 517**

**Beschreibung**

Die vorliegende Erfindung betrifft ein Verfahren zum Ausgleich von Ausrichtfehlern eines Scheinwerfers für ein Fahrzeug, wobei der Scheinwerfer dazu vorbereitet ist, Licht mit unterschiedlichen Strahldiagrammen zu erzeugen, wobei das Verfahren folgende Schritte umfasst: Erzeugen einer Lichtmarkierung mittels des Scheinwerfers auf einer Fahrbahn, die außerhalb des Fahrzeugs gelegen ist; Aufnahme eines Bilds der Lichtmarkierung mittels einer Kamera; Aufnahme eines Umgebungsbilds mittels derselben Kamera und Ermitteln einer umgebungsbildbezogenen Sollausleuchtung unter Berücksichtigung von Ausleuchtregeln. Außerdem betrifft die Erfindung eine entsprechende Scheinwerferanlage.

Die DE 10 2010 046 517 A1 beschreibt ein Fahrzeug mit zwei Lichteinheiten und einer Bilderfassungseinheit zur Erfassung einer Umgebungssituation des Fahrzeugs. Das Fahrlicht wird automatisch zwischen einem Fernlicht, einem Teilfernlicht und einem Abblendlicht geschaltet, wobei eine Leuchtweite, eine Ausleuchtcharakteristik und/oder ein horizontaler Schwenkwinkel automatisch eingestellt werden. In einer der beiden Lichteinheiten ist im Strahlengang ein mechanisch betätigtes optisches Element angeordnet, das in der Lichtverteilung zwei vertikale Hell-Dunkel-Grenzen erzeugt. Mittels einer Bilderfassungseinheit wird anhand der vertikalen Hell-Dunkel-Grenzen eine Kalibrierung und Justierung der Bilderfassungseinheit durchgeführt. Soll-Hell-Dunkel-Grenzen können auch in der Bilderfassungseinheit als Muster hinterlegt sein. Aus der Position der vertikalen Hell-Dunkel-Grenzen im Bild der Bilderfassungseinheit wird ein eingestellter Ausrichtungswinkel der Bilderfassungseinheit ermittelt. Die Bilderfassungseinheit und die Lichteinheiten können auch in einem fahraktiven Zustand des Fahrzeugs kalibriert und justiert werden.

Die DE 10 2010 006 190 A1 beschreibt ein Fahrzeug, bei welchem mittels einer aktivierten Lichtquelle eine spezifische Lichtfunktion charakterisierende Lichtverteilungen einer Lichteinheit erzeugt werden. Es wird ein Bild der Lichtverteilung mittels einer Bilderfassungseinheit des Fahrzeugs erfasst. Mittels einer Auswertung des erfassten Bildes wird eine horizontale und/oder vertikale Position zumindest eines vorgegebenen Teils der Lichtverteilung ermittelt und mit einer vorgegebenen horizontalen und/oder vertikalen Sollposition verglichen. Bei einer Abweichung der ermittelten Position von der vorgegebenen Sollposition werden Mittel zum horizontalen und/oder vertikalen Justieren der Lichteinheit angesteuert.

Die DE 10 2007 049 619 A1 beschreibt ein Leuchtsystem für ein Fahrzeug mit einer Lichteinheit, die dazu vorbereitet ist, Licht mit unterschiedlichen Strahldiagrammen zu erzeugen. Die Lichteinheit weist eine Basis-Lichtquelle auf, mit welcher im aktivierten Zustand zumindest eine eine spezifische Lichtfunktion charakterisierende Lichtverteilung erzeugbar ist. Außerdem ist eine optische Justage-Markierung im sichtbaren Spektralbereich für das menschliche Auge unsichtbar erzeugbar. Die Justagemarkierung ist in einem Justagemodus der Lichteinheit mittels einer Detektoreinheit erfassbar. Die Lichteinheit ist abhängig von einem Erfassen und einem Vergleichen mit einer Referenzmarkierung automatisch justierbar. Hierzu kann die Lichteinheit mittels einer Aktuatorik in vertikaler als auch in horizontaler Schwenkrichtung verstellt werden.

Die EP 2 128 590 A1 beschreibt ein hinter einem ersten Fahrzeug fahrendes zweites Fahrzeug, das ein System zur veränderlichen Einstellung einer horizontalen Hell-Dunkel-Grenze aufweist. Mit Hilfe einer Blendenwelle können verschiedene Lichtfiguren erzeugt werden, die sowohl unterschiedliche Formen der Lichtverteilung als auch verschiedene horizontale Hell-Dunkel-Grenzen repräsentieren.

Die DE 10 2007 022 524 A1 beschreibt ein Kraftfahrzeug mit einer Abbildungseinrichtung zum Erzeugen eines Abbildes eines Strahlungsmusters in der Umgebung des Kraftfahrzeugs, eine Erfassungseinrichtung zum mehrfachen zeitlich aufeinanderfolgenden Erfassen von durch die Umgebung beeinflussten Abbildern des Strahlungsmusters und eine Prozessoreinrichtung, mit der (basierend auf einem Unterschied zwischen zeitlich unmittelbar oder mittelbar aufeinander folgend erfassten Abbildern des Strahlungsmusters) ein Hindernis in der Umgebung detektiert wird.

Aus der DE 10 2008 011 699 A1 ist ein Verfahren zum Einstellen eines Scheinwerfers bekannt. Hierzu wird mittels des Scheinwerfers ein Muster auf der Fahrbahn erzeugt. Das Muster wird von einer Bilderfassungsvorrichtung erfasst. Der Scheinwerfer, mit welchem das Muster projiziert wird, wird in Abhängigkeit eines Musters eingestellt, das in dem Bild aufgenommen wurde. Dieses bekannte Verfahren hat den Nachteil, dass bei einer Stufigkeit der Einstellbarkeit des Scheinwerfers und/oder bei Toleranzen in dem Einstellmechanismus Ausleuchtungsfehler verbleiben, die durch das bekannte Verfahren nicht beseitigt werden.

Die Aufgabe der vorliegenden Erfindung besteht darin, ein Lichtelement bereitzustellen, mit dem bei einer Stufigkeit der Einstellbarkeit des Scheinwerfers und/oder bei Toleranzen in dem Einstellmechanismus Ausleuchtungsfehler noch weiter verringert werden, als dies mit bekannten Verfahren zum Einstellen eines Scheinwerfers möglich ist. Außerdem besteht die Aufgabe der Erfindung darin, eine Scheinwerferanlage mit diesem Vorteil bereitzustellen.

Erfindungsgemäß wird diese Aufgabe durch ein Verfahren nach Anspruch 1 und ein Fahrzeug nach Anspruch 7 gelöst. Vorteilhafte Weiterbildungen der Erfindung ergeben sich aus den Unteransprüchen.

Entsprechend der vorliegenden Erfindung wird demnach ein Verfahren zum Ausgleich von Ausrichtfehlern eines Scheinwerfers für ein Fahrzeug bereitgestellt, wobei der Scheinwerfer dazu vorbereitet ist, Licht mit unterschiedlichen Strahldiagrammen zu erzeugen, wobei das Verfahren folgende Schritte umfasst: Erzeugen einer Lichtmarkierung mittels des Scheinwerfers auf einer Fahrbahn, die außerhalb des Fahrzeugs gelegen ist, wobei die Lichtmarkierung vor, neben oder hinter dem Fahrzeug in einem Bereich erzeugt wird, der sich räumlich zwischen einer unteren Sichtgrenze der Kamera und einer unteren Sichtgrenze eines Fahrers; Aufnahme eines Bilds der Lichtmarkierung mittels einer Kamera; Aufnahme eines Umgebungsbilds mittels derselben Kamera; Ermitteln einer umgebungsbildbezogenen Sollausleuchtung unter Berücksichtigung von Ausleuchtregeln und des aufgenommenen Umgebungsbilds; Ermitteln einer lichtmarkierungsbezogenen Sollausleuchtung unter Berücksichtigung der ermittelten umgebungsbildbezogenen Sollausleuchtung und des aufgenommenen Bilds der Lichtmarkierung; und Einstellen eines Strahldiagramms des Scheinwerfers unter Berücksichtigung der lichtmarkierungsbezogenen Sollausleuchtung.

Das Fahrzeug ist erfindungsgemäß dadurch weitergebildet, dass es zur Durchführung des erfindungsgemäßen Verfahrens vorbereitet ist, wobei die untere Sichtgrenze der Kamera näher an dem Fahrzeug liegt als die untere Sichtgrenze des Fahrers.

Zum flexiblen Einstellen des Strahldiagramms des Scheinwerfers wurden in den letzten Jahren adaptive Matrix-LED-Lichtsysteme entwickelt, die auch als Matrix-Beam-Systeme bezeichnet werden. Durch Ermitteln einer umgebungsbildbezogenen Sollausleuchtung unter Berücksichtigung von Ausleuchtregeln kann dem Fahrer in unterschiedlichen Verkehrs- und Witterungssituationen mit diesen Lichtsystemen eine optimale Ausleuchtung des Verkehrsgeschehens zur Verfügung gestellt werden. Matrix-Beam-Systeme zeichnen sich dadurch aus, dass bei Dunkelheit dauerhaft mit Fernlicht gefahren werden kann und nur Bereiche, in denen sich andere Verkehrsteilnehmer befinden, abgeblendet werden. Das Abblenden wird mechanikfrei über eine frei programmierbare LED-Matrix realisiert. Allerdings setzt die starke Anpassung des Lichts an die jeweilige Verkehrs- und Witterungssituation eine besonders genaue und zuverlässige Lichteinstellung voraus.

Dadurch, dass eine lichtmarkierungsbezogene Sollausleuchtung unter Berücksichtigung der ermittelten umgebungsbildbezogenen Sollausleuchtung und des aufgenommenen Bilds der Lichtmarkierung ermittelt wird und ein Strahldiagramm des Scheinwerfers unter Berücksichtigung der lichtmarkierungsbezogenen Sollausleuchtung eingestellt wird, können sich Ausrichtfehler (sofern sie nicht allzu groß sind) auch dann nicht mehr auf die Beleuchtung der Umgebung mittels des Scheinwerfers auswirken, wenn der Ausrichtfehler des Scheinwerfers nicht für sich alleine beseitigt wird. Gegenüber dem bekannten Verfahren hat das erfindungsgemäße Verfahren den Vorteil, dass sich eine Stufigkeit der Einstellbarkeit des Scheinwerfers und/oder Toleranzen in dem Einstellmechanismus nicht mehr oder zumindest weniger stark auf eine Ausleuchtungsgenauigkeit auswirkt. Auf eine motorische Einstellbarkeit des Scheinwerfers zur Beseitigung kleiner Ausrichtfehler kann verzichtet werden. Gewicht und Herstellkosten der Scheinwerferanlage können so verringert werden. Auch auf eine elektronische Einstellbarkeit des Scheinwerfers zur separaten Beseitigung kleiner Ausrichtfehler kann verzichtet werden. Hierdurch vereinfacht sich eine Komplexität und somit ein Entwicklungs-, Test- und Wartungsaufwand der Scheinwerferanlage.

Eine Ausführungsform des Verfahrens sieht vor, dass die Aufnahme des Bilds der Lichtmarkierung vor und/oder nach der Aufnahme des Umgebungsbilds erfolgt. In der Regel dürfte es zweckmäßiger sein, das Lichtmarkierungsbild vor dem Umgebungsbild aufzunehmen. Beispielsweise können dann aufgenommene Lichtmarkierungsbilder jeweils für mehrere nachfolgende aktuelle Umgebungsbilder verwendet werden.

Eine andere Ausführungsform des Verfahrens sieht vor, dass die Aufnahme des Bilds der Lichtmarkierung gleichzeitig mit der Aufnahme des Umgebungsbilds erfolgt. Hierdurch kann die Aktualität der aufgenommenen Lichtmarkierungsbilder erhöht werden.

Bevorzugt ist eine Weiterbildung des Verfahrens, in der die Lichtmarkierung überwiegend mittels Licht erzeugt wird, das eine Wellenlänge zwischen 380 nm und 780 nm aufweist. Hierdurch kann eine spektrale Aufnahmefähigkeit der Kamera für die Aufnahme der Lichtmarkierungsbilder unverändert bleiben. Wenn Kameras auch bei sehr hellem Tageslicht zuverlässig arbeiten sollen, umfasst die Optik der Kamera typischerweise einen Infrarotfilter, so dass eine Erkennung einer infraroten Lichtmarkierung damit nicht möglich ist.

In einer nicht beanspruchten und nicht erfindungsgemäßen Ausführungsform ist es vorgesehen , dass die Lichtmarkierung in einem Frequenzbereich, mit einer Modulationsfrequenz und/oder mit einer Amplitude erzeugt wird, mit dem bzw. mit der Licht für das menschliche Auge nicht wahrnehmbar ist. Hierdurch wird eine Ablenkung und/oder Irritation des Fahrers und/oder anderer Verkehrsteilnehmer vermieden, die verkehrsgefährdend sein kann. Wenn die Lichtmarkierung für das menschliche Auge nicht wahrnehmbar ist, kann sie auch an solchen Objekten erzeugt werden, die sich in einer Hauptbeleuchtungsrichtung befinden, ein ausreichendes Lichtreflexionsvermögen aufweisen und sich nicht zu weit von dem Scheinwerfer entfernt befinden. Hierdurch wird vermieden, dass für die Lichtmarkierung Licht in eine Richtung abgestrahlt wird, wo es aus Fahrersicht ohne Nutzen ist. Dieses Merkmal kann also dazu beitragen, einen Wirkungsgrad der Scheinwerferanlage zu erhöhen. Außerdem befindet sich die Lichtmarkierung so mehr im Zentrum solcher Bildteile, die bei schneller Fahrt mit einer hohen Auflösung auszuwerten sind, so dass für diese wichtigen Bildteile ein Ablagefehler zwischen dem Bild der aufgenommenen Bildmarke und dem aufgenommenen Umgebungsbild und/oder ein Parallaxenfehler verringert wird.

Darüberhinaus kann es von Vorteil sein, wenn die Lichtmarkierung winkelförmig und/oder L-förmig ist. Hierdurch kann mit geringem Herstellungsaufwand für eine Blende zur Erzeugung der Lichtmarkierung eine gute Erkennung und Auswertbarkeit der Lichtmarkierung erreicht werden.

Vorteilhaft ist auch, wenn zur Erzeugung des Bilds der Lichtmarkierung mehrere Aufnahmen der Lichtmarkierung genutzt werden. Hierdurch kann beispielsweise mittels Überlagerung mehrerer Lichtmarkierungsbilder ein synthetisches Lichtmarkierungsbild erzeugt werden, in welchem bewegte Objekte unscharf abgebildet sind, wodurch eine Erkennung und Auswertung des synthetischen Lichtmarkierungsbilds vereinfacht und verbessert wird.

Die Lichtmarkierung wird vor, neben oder hinter dem Fahrzeug in einem Bereich erzeugt, der sich räumlich zwischen einer Sichtgrenze der Kamera und einer Sichtgrenze eines Fahrers befindet. Hierdurch wird eine Ablenkung und/oder Irritation des Fahrers durch die Lichtmarkierung vermieden.

Das Einstellen des Strahldiagramms des Scheinwerfers kann mittels einer elektronischen und/oder einer mechanischen Anpassung einer Lichtabstrahlcharakteristik des Scheinwerfers erfolgen. Eine schnelle elektronische Anpassung einer Abstrahlcharakteristik des Scheinwerfers ist insbesondere mittels eines Scheinwerfers mit Matrix-LED-Technologie möglich.

Die vorliegende Erfindung wird nun anhand der beigefügten Zeichnungen näher erläutert.

Hierbei zeigen:

Fig. 1    eine schematische Seitenansicht zur Erläuterung eines Bereichs, der für einen normalgroßen Fahrer aus seiner normalen Sitzposition ohne sich vorzubeugen nicht ohne Weiteres einsehbar ist, aber von einer Fahrzeugkamera einsehbar ist;

Fig. 2    schematisch eine Aufsicht mit zwei in diesem Bereich angeordneten Lichtmarkierungen unterschiedlicher Gestalt;

Fig. 3    eine zeitliche Abfolge von Kamerabelichtung und Modulation einer Lichtmarkierung; und

Fig. 4    ein schematisches Ablaufdiagramm eines Verfahrens zum Ausgleich von Ausrichtfehlern eines Scheinwerfers für ein Fahrzeug .

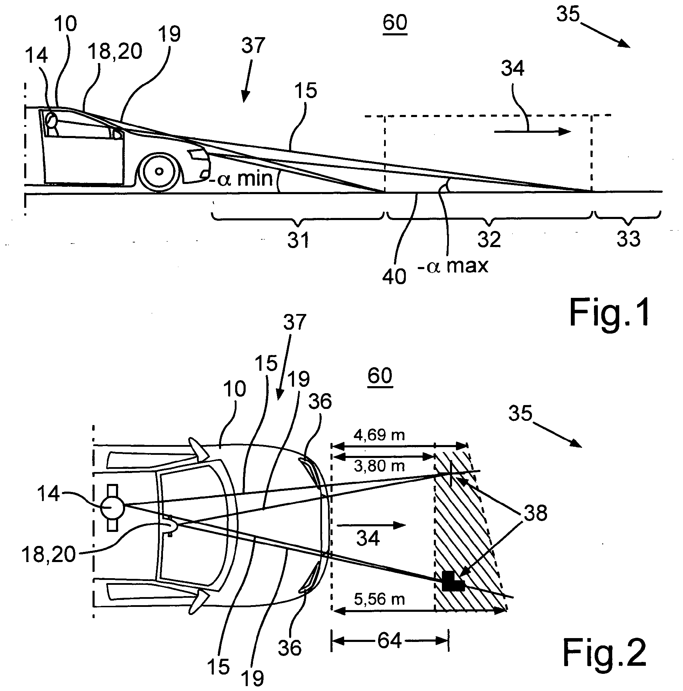

Die Fig. 1 und Fig. 2 zeigen ein Fahrzeug 10 mit einer unteren Sichtgrenze 15 eines normalgroßen Fahrers 14 in normaler Sitzposition und einer unteren Sichtgrenze 19 einer Kamera 18, die in einem Innenrückspiegel 20 (vorzugsweise in einem Spiegelfuß) des Fahrzeugs 10 angeordnet ist. Hieraus wird deutlich, dass sich vor dem Fahrzeug 10 ein erster Bereich 31 befindet, der weder für den Fahrer 14 noch für die Kamera 18 einsehbar ist.

Die Kamera 18 kann Teil eines Fernlichtassistenten sein, der Kamerainformationen nutzt und beim Auftauchen eines anderen Verkehrsteilnehmers in Strahlrichtung 34 umgehend und selbsttätig von Fernlicht zu Abblendlicht wechselt. Der Fernlichtassistent kann auch dazu vorbereitet sein, Kamerainformationen zu nutzen, um beim Verschwinden eines anderen Verkehrsteilnehmers in Strahlrichtung 34 umgehend und selbsttätig von Abblendlicht zu Fernlicht zu wechseln. Mittels einer ansteuerbaren Walze ist es auch möglich, kontinuierlich zwischen Fern- und Abblendlichtverteilung zu wechseln. Dieses Verfahren ist unter den Namen 'adaptive Hell-Dunkel-Grenze' und 'gleitende Leuchtweite' bekannt.

Eine noch fortschrittlichere unter den Namen 'blendfreies Dauerfernlicht' und 'Matrix-Beam' bekannte Entwicklung sieht vor, dass die Fernlichtverteilung eines Scheinwerfers 36 auf der Basis von frei programmierbaren LED-Arrays vollständig individualisierbar ist. Damit kann sämtliche Mechanik im Scheinwerfer 36 entfallen, und es können mehrere, von der Fahrzeugkamera 18 erkannte Verkehrsteilnehmer einzeln von einer Anleuchtung durch den Scheinwerfer 36 ausgespart werden. Insbesondere bei kurvenreichen Fahrten hat sich das Matrix-Beam-Verfahren aufgrund seiner sehr ruhigen Anpassung der Lichtverteilung bewährt. Allerdings müssen bei dem Matrix-Beam-Verfahren diskrete Lichtsegmente geschaltet werden, so dass beim Deaktivieren eines Lichtsegments gleich eine spürbare Lücke in der Lichtverteilung entsteht oder sich eine bereits vorhandene Lücke um ein spürbares Stück verbreitet. Bei einem adaptiven Lichtsystem, mit dem individuelle Teilbereiche des Fernlichts auch dann genutzt werden, wenn sich ein anderer Verkehrsteilnehmer im Strahlbereich des Scheinwerfers 36 befindet, erhöht sich der Nutzen des Lichtsystems mit der Genauigkeit der Fernlichtausrichtung.

An den ersten Bereich 31 schließt sich ein zwischen etwa 89 cm und 176 cm langer zweiter Bereich 32 an, der zwar von der Kamera 18 eingesehen werden kann, aber nicht von dem Fahrer 14 eingesehen werden kann, sofern sich dieser nicht vorbeugt. Die Längen des ersten 31 und des zweiten 32 Bereichs wurden in einer Probandenstudie mit 15 Männern und 5 Frauen ermittelt, die eine Körpergröße zwischen 1,65 m und 2,08 m mit einem Mittelwert von 1,83 m hatten. Als Fahrzeug 10 für die Probandenstudie diente ein Audi A8.

Der Winkelbereich amin, amax, in welchem der Scheinwerfer 36 die Lichtmarkierung 38 projizieren sollte, berechnet sich gemäß der folgenden Formeln (1) und (2), wobei hSW eine Höhe des Scheinwerfers über der Fahrbahn ist, dk ein horizontaler Abstand der Sichtgrenze 19 der Kamera 18 von dem Scheinwerfer 36, dFI ein horizontaler linker Abstand der Sichtgrenze 15 des Fahrers 14 von dem linken Scheinwerfer 36, und dFR ein horizontaler rechter Abstand der Sichtgrenze 15 des Fahrers 14 von dem rechten Scheinwerfer 36:

$$\alpha min = arctan\ (dK/hSW)\ \square\ -\ 10{,}4° \qquad (1)$$

$$\alpha max = arctan\ (min(dFl,\ dFr)/hSW)\ \square\ -\ 8{,}5° \qquad (2)$$

Daraus folgt, dass die Lichtmarkierung 38 vertikal im Winkelbereich zwischen -9° und -10° angeordnet sein sollte. Ein dynamischer Fahrtest, in dem eine Kreuzstruktur projiziert wurde, zeigte, dass eine leichte Überschreitung der Sichtgrenze 15 des Fahrers 14 akzeptabel ist. Die Lichtmarkierung 38 ist dann für den Fahrer 14 zwar teilweise erkennbar, wird jedoch in der Regel nicht wahrgenommen, wenn der Blick des Fahrers 14 auf den Fernbereich 35 gerichtet ist. Diese Erkenntnis lässt es akzeptabel erscheinen, für die Festlegung der Sichtgrenze 15 einen Mittelwert aus den Sichtgrenzen der Fahrer unterschiedlicher Körpergröße zugrunde zu legen.

An den zweiten Bereich 32 schließt ein dritter Bereich 33 an, der bis zum Horizont reicht und sowohl von der Kamera 18 als auch von dem Fahrer 14 jeweils bis zum nächsten dazwischenliegenden Objekt eingesehen werden kann.

Das Licht für die Lichtmarkierung 38 kann außerhalb oder innerhalb des Scheinwerfers 36 erzeugt werden. Vorzugsweise wird für jeden der beiden Scheinwerfer 36 je eine Lichtmarkierung 38 knapp vor dem Fahrzeug 10 auf die Fahrbahn 40 projiziert. Für die Erzeugung der Lichtmarkierung 38 wird ein Projektionsmodul eingesetzt. Eine Ausführungsform sieht vor, dass das vom Leuchtmittel ausgesandte Strahlenbündel zur Erzeugung der Lichtmarkierung von einer Blende beschnitten wird. Wenn man unterstellt, dass der zweite Bereich 32 aus Sicht der Abbildungslinse bereits einem unendlichen Abstand zugeordnet werden kann ("bereits im Unendlichen liegt"), sollte die Blende für eine scharfe Abbildung in der von der Fahrbahn 40 abgewandten Brennebene der Abbildungslinse angeordnet werden. Unter Abbildungslinse wird hier ein optisches System verstanden, das eine oder mehrere Linsen und/oder Spiegel umfassen kann. Für eine Verbesserung der Schärfe der Lichtmarke können Blendenteile, deren Abbildung sich näher am Fahrzeug 10 befindet als die Abbildung anderer Blendenteile, in etwas größerem Abstand zur Abbildungslinse als die anderen Blendteile angeordnet sein und umgekehrt. Folglich kann es zweckmäßig sein, die Blende relativ zu einer Hauptebene der Abbildungslinse geneigt anzuordnen.

Typischerweise verfügt die Optik der im Spiegelfuß verbauten Multifunktionskamera 18 (welche auch andere Fahrerassistenzfunktionen mit Informationen versorgt) über ein Infrarotfilter, damit die Kamera 18 auch bei sehr hellem Tageslicht zuverlässig arbeiten kann. Aus diesem Grund ist es zweckmäßig, für die Erzeugung der Lichtmarkierung 38 Hochleistungs-LED einzusetzen, die weißes Licht erzeugen, das für die Erkennung der Lichtmarkierung 38 mittels der Fahrzeugkamera 18 geeignet ist. Außerdem kann so eine Irritation des Fahrers 14 und/oder anderer Verkehrsteilnehmer durch eine Farbigkeit der Lichtmarkierung 38 vermieden werden.

Eine Herausforderung bildet die mechanische Herstellung der notwendigen Blenden. Für ein Lichtkreuz 42 ist eine Blende mit einem sehr dünnen Schlitz nötig. Ein Lichtkreuz 42 hat außerdem den Nachteil, dass ein Großteil des erzeugten Lichts durch die Blende nutzlos vernichtet wird. Für ein Schattenkreuz müsste eine sehr dünne und damit recht instabile Kreuzstruktur in die Brennebene der Abbildungslinse eingebracht werden. Eine vorteilhafte kombinierte Lösung ist eine Blende mit einem L-förmigen Lichtdurchlass und/oder mit einer Abdeckung eines Viertels des Lichtdurchlasses zur Erzeugung einer L-förmigen Lichtmarkierung 38, wie sie Fig. 2 dargestellt. So eine Blende ist mechanisch einfach herzustellen und im Strahlengang zu befestigen. Es wird nur verhältnismäßig wenig Licht vernichtet. Und es stehen zwei zueinander rechtwinklig angeordnete Linien zur Vermessung zur Verfügung.

Die Lage der Lichtmarkierung 38 auf der Fahrbahn 40 ist durch konstruktive Maßnahmen innerhalb des Scheinwerfers 36 fest an die Ausrichtung der Matrix-Beam-Lichtsegmente gekoppelt.

Für die Detektion der Lichtmarkierung 38 bieten sich insbesondere zwei Prinzipien an. Das erste Prinzip besteht darin, dass aufeinanderfolgende Bilder 51 der Kamera 18 aufintegriert werden. Dabei wird ausgenutzt, das die Lichtmarkierung 38 in jedem Kamerabild theoretisch an derselben Stelle bleibt und scharf bleibt. Der restliche Bildinhalt wird bei Fahrzeugbewegung infolge der Relativbewegung der Fahrzeugumgebung 60 zum Fahrzeug 10 unscharf. Das zweite Prinzip besteht darin, dass die Lichtmarkierung 38 mit einer relativ niedrigen Frequenz moduliert wird.

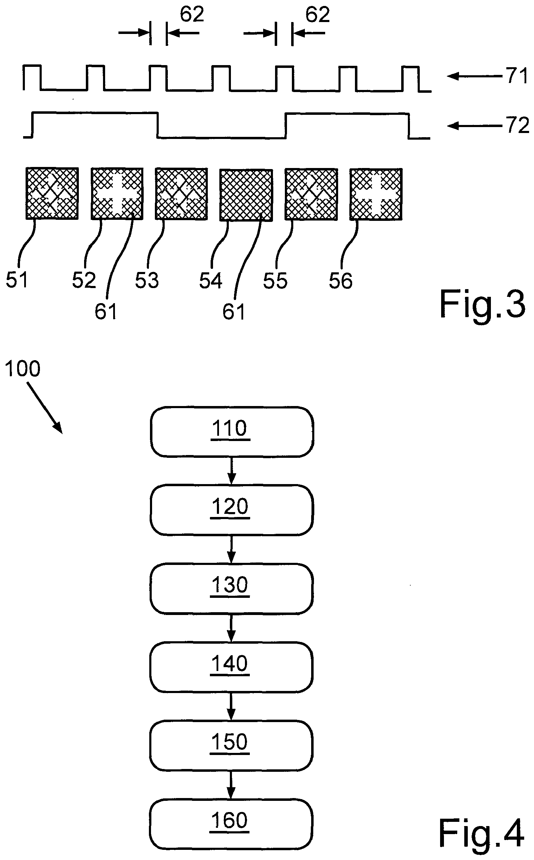

Die Fig. 3 zeigt eine mögliche zeitliche Abfolge von Kamerabelichtung und Modulation einer Lichtmarkierung. Im oberen Teil der Figur ist der Belichtungs- und Auswertezyklus 71 der Kamera 18, in der Mitte der Schaltzustand 72 der Lichtmarkierung 38, und im unteren Teil der Figur sind die resultierenden Kamerabilder 51 bis 56 dargestellt. Ziel ist es, innerhalb weniger Kamerabilder 51 ein Bild 52 mit Lichtmarkierung 38 und ein Bild 54 ohne Lichtmarkierung 38 zu erhalten. Unter der Annahme, dass die Szenerie 61 in beiden Bildern 52, 54 gleich ist, kann durch Differenzbildung zwischen den beiden Bildern 52, 54 die Lichtmarkierung 38 herausgerechnet (d.h. hervorgehoben oder isoliert) werden. Das letztgenannte Verfahren hat in Vorversuchen geringfügig bessere Ergebnisse als das vorgenannte geliefert und wird nun näher erläutert.

Im Folgenden wird erläutert, wie die Modulationsfrequenz zweckmäßigerweise gewählt werden sollte. In dem dargestellten Beispiel ist die Lichtmarkierung 38 in dem ersten 51 und dem dritten 53 Kamerabild jeweils nur für die Hälfte der Belichtungszeit 62 aktiv. Diese Bilder 51, 53 müssen verworfen werden. Das Differenzbild aus dem zweiten 52 und dem vierten 54 Kamerabild hingegen liefert ein sauberes Bild der Lichtmarkierung 38. Hier wird eine Modulationsfrequenz verwendet, die der Hälfte der Kamerafrequenz entspricht. Die Frequenz könnte weiter gesenkt werden, mit dem Vorteil, dass dann jeweils mehrere aufeinanderfolgende Bilder entstehen, in denen die Lichtmarkierung 38 komplett aktiviert oder deaktiviert ist. Durch Mittelwertbildung kann das Bildrauschen minimiert werden. Nachteilig ist dann jedoch, dass sich die Wahrscheinlichkeit vergrößert, dass sich die Szenerie 61 ändert, und somit die getroffene Annahme nicht zutrifft, wodurch das Ergebnis der Differenzbildung beeinträchtigt wird.

Erste Erfahrung haben gezeigt , dass ein entgegenkommender Verkehrsteilnehmer das niederfrequent modulierte Licht bei einer Begegnung kaum wahrnimmt. Falls sich herausstellt, dass andere Verkehrsteilnehmer durch die Lichtmarkierung 38 irritiert werden, kann daran gedacht werden, die Lichtmarkierung 38 nur zu erzeugen, wenn die Kamera 18 keinen anderen Verkehrsteilnehmer im Umkreis detektiert und ansonsten für die Ermittlung der lichtmarkierungsbezogenen Sollausleuchtung die Aufnahme von einer zuvor detektierten Lichtmarkierung 38 zu verwenden.

Die Kamera 18 erkennt die Lichtmarkierungen 38. Durch die geringe Entfernung 64 zwischen Fahrzeug 10 und Lichtmarkierung 38 ist ein genauer Ausgleich einer Horizontal- und Vertikalabweichung der Ausrichtung des Scheinwerfers gut möglich.

Wenn für jeden von zwei oder mehreren Frontscheinwerfern 36 eine Lichtmarkierung 38 erzeugt wird und bei der Berücksichtigung des aufgenommenen Bilds der Lichtmarkierung 38 auch Bilder der Lichtmarkierungen 38 für die anderen Scheinwerfer 36 berücksichtigt werden, kann unter Berücksichtigung trigonometrischer Zusammenhänge zusätzlicher Nutzen aus den Bildern der aufgenommenen Lichtmarkierungen 38 geschöpft werden, beispielsweise um eine relative Lage der Lichtmarkierungen 38 zueinander, oder eine relative Lage einer Lichtmarkierung 38 zu der Kamera 18 zu ermitteln. Entsprechende Vorteile können mit einem Kamerasystem 18 (beispielsweise mittels einer Stereokamera) erzielt werden, das mehrere Aufnahmekanäle aufweist, die räumlich unterschiedlich angeordnet oder ausgerichtet sind.

Die Fig. 4 zeigt den Ablauf eines Verfahrens 100 zum Ausgleich von Ausrichtfehlern eines Scheinwerfers 36 für ein Fahrzeug 10, wobei der Scheinwerfer 36 dazu vorbereitet ist, Licht mit unterschiedlichen Strahldiagrammen zu erzeugen. In einem ersten Schritt 110 wird eine Lichtmarkierung 38 mittels des Scheinwerfers 36 auf einer Fahrbahn 40 erzeugt, die außerhalb des Fahrzeugs 10 gelegen ist. Die Lichtmarkierung 38 wird vor, neben oder hinter dem Fahrzeug 10 in einem Bereich erzeugt, der sich räumlich zwischen einer unteren Sichtgrenze 19 der Kamera 18 und einer unteren Sichtgrenze 15 eines Fahrers 14 mit einer Körpergröße von 1,65 m oder 1,83 m in normaler Sitzposition befindet. In einem zweiten Schritt 120 wird ein Bild der Lichtmarkierung 38 mittels einer Kamera 18 aufgenommen. In einem dritten Schritt 130 wird ein Umgebungsbild mittels derselben Kamera 18 aufgenommen. In einem vierten Schritt 140 wird eine umgebungsbildbezogenen Sollausleuchtung unter Berücksichtigung von Ausleuchtregeln ermittelt. In einem fünften Schritt 150 wird eine lichtmarkierungsbezogene Sollausleuchtung unter Berücksichtigung der ermittelten umgebungsbildbezogenen Sollausleuchtung und des aufgenommenen Bilds der Lichtmarkierung 38 ermittelt. In einem sechsten Schritt 160 wird ein Strahldiagramm des Scheinwerfers 36 unter Berücksichtigung der lichtmarkierungsbezogenen Sollausleuchtung eingestellt.

Zusätzlich oder alternativ zu den oben beschriebenen Verfahren 100 zum Ausgleich von Ausrichtfehlern eines Scheinwerfers 36 kann eine Fehlstellung des Scheinwerfers 36 ermittelt werden, also eine Stellung des Scheinwerfers 36 kalibriert werden, indem die erkannte Istposition der aufgenommenen Lichtmarkierungen 38 über eine feste Beziehung des Scheinwerfers 36 (beispielsweise der Matrix-Beam-Lichtsegmente) zur Lichtmarkierung 38 mit einer vorher festgelegten Sollposition der aufgenommenen Lichtmarkierungen 38 verglichen wird.

## Patentansprüche

1. Verfahren (100) zum Ausgleich von Ausrichtfehlern eines Scheinwerfers (36) für ein Fahrzeug (10), wobei der Scheinwerfer (36) dazu vorbereitet ist, Licht mit unterschiedlichen Strahldiagrammen zu erzeugen, wobei das Verfahren folgende Schritte umfasst:

   - Erzeugen (110) einer Lichtmarkierung (38) mittels des Scheinwerfers (36) auf einer Fahrbahn (40), die außerhalb des Fahrzeugs (10) gelegen ist, wobei die Lichtmarkierung (38) vor, neben oder hinter dem Fahrzeug (10) in einem Bereich (32) erzeugt wird, der sich räumlich zwischen einer unteren Sichtgrenze (19) der Kamera (18) und einer unteren Sichtgrenze (15) eines Fahrers (14) befindet; wobei die untere Sichtgrenze (19) der Kamera (18) näher an dem Fahrzeug liegt als die untere Sichtgrenze (15) des Fahrers (14), so dass der Bereich (32) von der Kamera (18) eingesehen werden kann, aber nicht von dem Fahrer (14) eingesehen werden kann;
   - Aufnahme (120) eines Bilds der Lichtmarkierung (38) mittels einer Kamera (18);
   - Aufnahme (130) eines Umgebungsbilds mittels derselben Kamera (18);

wobei das Verfahren **dadurch gekennzeichnet ist, dass** es folgende Schritte umfasst:

- Ermitteln (140) einer umgebungsbildbezogenen Sollausleuchtung unter Berücksichtigung von Ausleuchtregeln und des aufgenommenen Umgebungsbilds;
- Ermitteln (150) einer lichtmarkierungsbezogenen Sollausleuchtung unter Berücksichtigung der ermittelten umgebungsbildbezogenen Sollausleuchtung und des aufgenommenen Bilds der Lichtmarkierung (38); und
- Einstellen (160) eines Strahldiagramms des Scheinwerfers (36) unter Berücksichtigung der lichtmarkierungsbezogenen Sollausleuchtung.

2. Verfahren (100) nach Anspruch 1, **dadurch gekennzeichnet, dass** die Aufnahme (120) des Bilds der Lichtmarkierung vor und/oder nach der Aufnahme (130) des Umgebungsbilds erfolgt.

3. Verfahren (100) nach Anspruch 1, **dadurch gekennzeichnet, dass** die Aufnahme (120) des Bilds der Lichtmarkierung gleichzeitig mit der Aufnahme (130) des Umgebungsbilds erfolgt.

4. Verfahren (100) nach einem der Ansprüche 1 bis 3,
   **dadurch gekennzeichnet, dass**
   die Lichtmarkierung (38) überwiegend mittels Licht erzeugt wird, das eine Wellenlänge zwischen 380 nm und 780 nm aufweist.

5. Verfahren (100) nach einem der Ansprüche 1 bis 4,
   **dadurch gekennzeichnet, dass**
   die Lichtmarkierung (38) winkelförmig und/oder L-förmig ist.

6. Verfahren (100) nach einem der vorhergehenden Ansprüche,
   **dadurch gekennzeichnet, dass**
   das Einstellen des Strahldiagramms des Scheinwerfers (36) mittels einer elektronischen und/oder einer mechanischen Anpassung einer Abstrahlcharakteristik des Scheinwerfers (36) erfolgt.

7. Fahrzeug (10) mit einer Scheinwerferanlage (37) und einer Kamera (18) **dadurch gekennzeichnet, dass** es zur Durchführung des Verfahrens (100) nach einem der vorhergehenden Ansprüche vorbereitet ist, wobei die untere Sichtgrenze (19) der Kamera (18) näher an dem Fahrzeug (10) liegt als die untere Sichtgrenze (15) des Fahrers (14).

## Claims

1. Method (100) for compensation of alignment errors of a headlamp (36) for a vehicle (10), wherein the headlamp (36) is prepared to generate light with different beam patterns, wherein the method comprises the following steps:

   - generation (110) of a light marking (38) by means of the headlamp (36) on a carriageway (40), which is situated outside the vehicle (10), wherein the light marking (38) is generated in front of, next to or behind the vehicle (10) in a region (32) that is spatially located between a lower visibility limit (19) of the camera (18) and a lower visibility limit (15) of a driver (14); wherein the lower visibility limit (19) of the camera (18) lies nearer to the vehicle than the lower visibility limit (15) of the driver (14), so that the region (32) can be viewed by the camera (18), but cannot be viewed by the driver (14);
   - taking (120) of an image of the light marking (38) by means of a camera (18);
   - taking (130) of an image of the surrounding area by means of the same camera (18);

   wherein the method is **characterised in that** it comprises the following steps:

   - determination (140) of a target illumination relating to an image of the surrounding area, taking into consideration illumination rules and the image of the surrounding area that was taken;
   - determination (150) of a light-marking-related target illumination, taking into consideration the determined target illumination relating to the image of the surrounding area and the image of the light marking (38) that was taken; and
   - adjusting (160) of a beam pattern of the headlamp (36), taking into consideration the light-marking-related target illumination.

**2.** Method (100) according to claim 1, **characterised in that** the taking (120) of the image of the light marking happens before and/or after the taking (130) of the image of the surrounding area.

**3.** Method (100) according to claim 1, **characterised in that** the taking (120) of the image of the light marking happens at the same time as the taking (130) of the image of the surrounding area.

**4.** Method (100) according to any one of claims 1 to 3, **characterised in that** the light marking (38) is generated predominantly by means of light having a wavelength between 380 nm and 780 nm.

**5.** Method (100) according to any one of claims 1 to 4, **characterised in that** the light marking (38) has an angular shape or an L shape.

**6.** Method (100) according to any one of the preceding claims, **characterised in that** the adjusting of the beam pattern of the headlamp (36) happens by means of an electronic and/or a mechanical adaptation of a beam characteristic of the headlamp (36).

**7.** Vehicle (10) having a headlamp system (37) and a camera (18), **characterised in that** it is prepared to carry out the method (100) according to any one of the preceding claims, wherein the lower visibility limit (19) of the camera (18) lies nearer to the vehicle (10) than the lower visibility limit (15) of the driver (14).

**Revendications**

**1.** Procédé (100) pour compenser les erreurs d'alignement d'un phare (36) pour un véhicule (10), le phare (36) étant préparé pour générer de la lumière avec différents modèles de faisceau, le procédé comprenant les étapes suivantes consistant à :

- générer (110) un marquage lumineux (38) au moyen du phare (36) sur une voie (40) située à l'extérieur du véhicule (10), le marquage lumineux (38) étant généré devant, à côté ou derrière le véhicule (10) dans une zone (32) située entre une limite visuelle inférieure (19) de la caméra (18) et une limite visuelle inférieure (15) d'un conducteur (14) ; la limite visuelle inférieure (19) de la caméra (18) étant plus proche du véhicule que la limite visuelle inférieure (15) du conducteur (14), de sorte que la zone (32) peut être vue par la caméra (18), mais ne peut pas être vue par le conducteur (14) ;
- enregistrer (120) une image du marqueur lumineux (38) au moyen d'une caméra (18) ;
- enregistrer (130) une image d'environnement au moyen de la même caméra (18) ; le procédé étant **caractérisé en ce qu'**il comprend les étapes suivantes consistant à :

- déterminer (140) un éclairage cible lié à l'image d'environnement en tenant compte des règles d'éclairage et de l'image d'environnement enregistrée ;
- déterminer (150) un éclairage cible lié au marqueur lumineux en tenant compte de l'éclairage cible déterminé lié à l'image d'environnement et de l'image enregistrée du marqueur lumineux (38) ; et
- régler (160) un modèle de faisceau du phare (36) en tenant compte de l'éclairage cible lié au marquage lumineux.

**2.** Procédé (100) selon la revendication 1, **caractérisé en ce que** l'enregistrement (120) de l'image du marquage lumineux est effectué avant et/ou après l'enregistrement (130) de l'image d'environnement.

**3.** Procédé (100) selon la revendication 1, **caractérisé en ce que** l'enregistrement (120) de l'image du marquage lumineux est effectué simultanément avec l'enregistrement (130) de l'image d'environnement.

**4.** Procédé (100) selon l'une quelconque des revendications 1 à 3,
**caractérisé en ce que**
le marquage lumineux (38) est principalement généré au moyen d'une lumière ayant une longueur d'onde comprise entre 380 nm et 780 nm.

**5.** Procédé (100) selon l'une quelconque des revendications 1 à 4,
**caractérisé en ce que**
le marquage lumineux (38) est angulaire et/ou en forme de L.

6. Procédé (100) selon l'une quelconque des revendications précédentes,
   **caractérisé en ce que**
   le réglage du modèle de faisceau du phare (36) s'effectue au moyen d'une adaptation électronique et/ou mécanique d'une caractéristique de rayonnement du phare (36).

7. Véhicule (10) équipé d'un système de phare (37) et d'une caméra (18)
   **caractérisé en ce que**
   il est préparé pour mettre en œuvre le procédé (100) selon l'une quelconque des revendications précédentes, dans lequel la limite visuelle inférieure (19) de la caméra (18) est plus proche du véhicule (10) que la limite visuelle inférieure (15) du conducteur (14).

Fig.1

Fig.2

Fig.3

Fig.4

**IN DER BESCHREIBUNG AUFGEFÜHRTE DOKUMENTE**

**In der Beschreibung aufgeführte Patentdokumente**

- DE 102010046517 A1
- DE 102010006190 A1
- DE 102007049619 A1
- EP 2128590 A1
- DE 102007022524 A1
- DE 102008011699 A1